# EUROPEAN PATENT APPLICATION

(11) **EP 1 327 942 A2**
(43) Date of publication of application: **16.07.2003**
(21) Application number: 02026666.4
(22) Date of filing: 29.11.2002
(51) Int. Cl.: G06F 17/30

(54) **A method for preventing a minor from sending personal data on a data communication network**

(30) Priority: 15.01.2002 IT MI20020063
(71) Applicant: Gestweb S.p.A., 25123 Brescia (IT)
(72) Inventor: Vinati, Samule, 25123 Brescia (BS) (IT); Vinati, Matteo, 25045 Castegnato (BS) (IT); Vinati, Felice, 25045 Castegnato (BS) (IT)
(74) Representative: Parisi, Luigi

(57) **Abstract**

Method for preventing an underage user from entering personal data on a data communication network, which has the particularly that it comprises the following steps:
find out whether a user connected to a data communication network is underage or not;
if said user is underage and if a user enters on the net a set of data containing sensitive information concerning said user, filter said set of data in order to eliminate from said set said user-sensitive data, thus aiming at protecting the right to privacy of said user connected to the communication network.

## Description

The present invention relates to a method for preventing a minor from sending personal data on a data communication network. More particularly, the invention relates to a process for preventing an underage user connected to a data communication network from sending on said network such personal data that would identify univocally the underage user connected to the net.

As is known, the constant increase of the data communication network Internet has resulted in a growing number of people accessing the net, a great part of whom consists of underage users.

On the other hand, the proliferation of porn sites, of sites providing fee-paying services and products, and in general of commercial sites both of conventional nature and of a nature whose connection would not be allowed to underage users, makes it necessary to protect the right to privacy of users connecting to the net, who might unconsciously enter their personal data on the net, which could be used to illicit purposes.

Indeed, it might happen that a user, in this case a minor, enters his personal data on the net when, while connecting to a website, he is asked to enter his data in order to access a given service, or for instance to buy a given product.

The entry of one's personal data on the net would not in itself be a problem if the user were an adult, whereas it can be a problem if the user is a minor and if these data are then used by the recipient to illicit purposes, such as for instance enticement (for instance in case of pedophiles) or home delivery of material that has not been expressly asked for by the user.

In a previous patent application the applicant has patented a process for preventing an underage user from accessing given Internet sites, if their content is not suitable for minors.

However, said solution does not prevent the underage user from entering on the net his personal data such as: surname, name, address, telephone number and the like, through which the user would be un-univocally identified.

The main task of the present invention is to realize a process for preventing an underage user from sending his personal data on a data communication network, in particular Internet, which therefore allows to filter the data sent by the user on the net, eliminating data that are potentially dangerous for the user.

Within the scope of this task the aim of the present invention is to realize a process for preventing an underage user from entering personal data on the net, which allows to carry out said filtering operation on personal data either directly on the user's computer or, alternatively, on the provider's computer.

Another aim of the present invention is to realize a process for preventing an underage user from entering personal data on the net, which protects the user's privacy.

A further aim of the present invention is to realize a process for preventing an underage user from entering personal data on a data communication network, which is highly reliable, quite simple to be carried out and not too expensive.

This task, as well as this and other aims which will be better described in the following, are achieved through a process for preventing an underage user from sending personal data on a data communication network, characterized in that it comprises the following stages:
find out whether a user connected to a data communication network is underage or not;
if said user is underage and if a user enters on the net a set of data containing sensitive information concerning said user, filter said set of data in order to eliminate from said set said user-sensitive data, thus aiming at protecting the right to privacy of said user connected to the net.

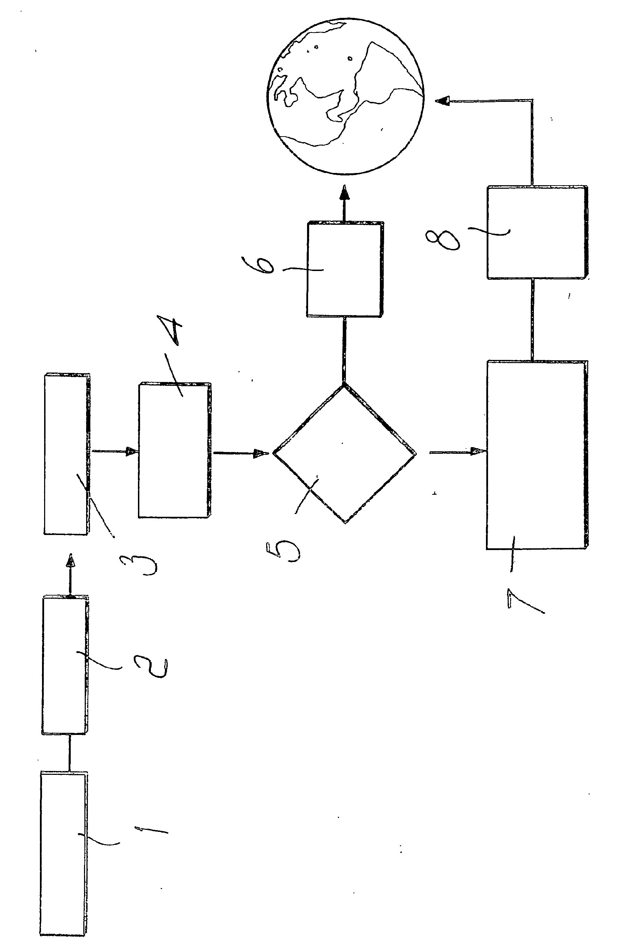

Further characteristics and advantages of the invention will be more evident from the description of embodiments of the process according to the present invention, shown to a mere indicative and nonlimiting purpose in the enclosed drawings in which the only figure shows the process according to the present invention with a schematic flowchart.

With reference to the figure mentioned above, the process according to the present invention provides for a first step of checking whether the user is underage or not, step 1. If the user which has been found out in step 1, is underage, and after connecting to a website enters his own personal data in a form, the process provides for a step in which the set of data containing the user's personal data, step 2, is sent from the user's computer to the provider's computer, step 3.

Now, according to a first embodiment of the invention, the process provides for a step 4 of activation of the control on the set of data sent on the net by the user.

Said control, step 5, provides for an analysis of the data in order to find whether they contain sensitive information, i.e. data that might be prejudicial to the minor's privacy.

Said data are for instance surname, name, address, telephone number and the like.

If such "sensitive" information is not present in the set of data sent by the user to the provider's computer, said set of data is entered on the net without changes, step 6.

Should that not be the case, i.e. if the set of data contains "sensitive" information, said set of data is suitably filtered, deleting, modifying or eclipsing the sensitive data and eventually creating a new set, step 7, which is in its turn sent on the net, step 8, though not containing data which might damage the minor.

Said data-filtering step can be carried out, as previously explained, on the provider's computer or directly on the user's computer, who then sends the provider a set of data that has already been deprived of data virtually prejudicial to the user's privacy.

Therefore, the process according to the invention allows to prevent minors connected to the net from signing or accepting any kind of agreement proposed on the net. Moreover, the law provision preventing the minor from stipulating agreements is thus complied with. In addition, as previously explained in great detail, the full privacy between the user and the data communication network is ensured.

It has been ascertained in practice that the process according to the invention wholly fulfills the intended task and aims, since it allows to protect minors surfing on the net, preventing the spreading of sensitive data concerning them and possibly concerning the family they belong to, thus ensuring a full privacy.

On the one hand, this allows to prevent a minor from mistakenly filling in a subscription form for a service or for the purchase of any kind of product, thus sending his personal data on the net and running the risk that said personal data are exploited to illicit purposes, which the user might not think of when filling in a given subscription form.

The process according to the invention provides for a preliminary and absolutely necessary step for the identification as minor of the user connected to the data communication network, in order to activate the filtering function for the set of data sent by the user on the data communication network.

The process thus conceived can undergo several changes and variants, all of which fall within the scope of the invention; moreover, all details can be replaced by other equivalent elements and/or steps.

## Claims

1. Method for preventing an underage user from entering personal data on a data communication network, **characterized in that** it comprises the following steps:
find out whether a user connected to a data communication network is underage or not;
if said user is underage and if a user enters on the net a set of data containing sensitive information concerning said user, filter said set of data in order to eliminate from said set said user-sensitive data, thus aiming at protecting the right to privacy of said user connected to the communication network.

2. Method according to claim 1, **characterized in that** said step of filtering of the set of data sent on the net by said user is carried out on web provider's computer.

3. Method according to claim 1, **characterized in that** said step of filtering of the set of data sent by the user is carried out directly on said user's computer.

4. Method according to one or more of the preceding claims, **characterized in that** said filtering step consists in its turn of the following steps:
previously verify whether said set of data sent by the user contains sensitive information concerning said user;
if said sensitive data are not present, enable the direct entry of said set of data on the net;
if said sensitive data are present, modify said set of data so as to eliminate, modify or eclipse said sensitive data.

5. Method according to claim 4, **characterized in that** the step consisting in deleting, modifying or eclipsing said sensitive information contained in the set of data sent by said user includes the creation of a new set of data without said sensitive information.

6. Method according to claim 5, **characterized in that** it comprises the step consisting in enabling the entry on the net of said new set of data without said sensitive information.
